# DEMANDE DE BREVET EUROPEEN

(11) **EP 1 429 040 A1**
(43) Date de publication de la demande: **16.06.2004**
(21) Numéro de dépôt: 03356189.5
(22) Date de dépôt: 28.11.2003
(51) Int. Cl.: F16B 21/02, F16B 13/08

(54) **Dispositif d'assemblage et chemin de câbles en comportant d'application**

(30) Priorité: 29.11.2002 FR 0215049
(71) Demandeur: Gewiss France SA, 21430 Liernais (FR)
(72) Inventeur: Lebrat, Jean-Pascal, 71640 Givry (FR)
(74) Mandataire: Myon, Gérard

(57) **Abrégé**

Ce dispositif d'assemblage d'une première et d'une deuxième pièces, dont chacune est percée d'un trou, comporte :
- un élément de retenue (12) qui est destiné à passer dans les deux trous et comprend une tête (24) de retenue de la première pièce, ainsi que deux ailes (25), en regard, de retenue de la deuxième pièce, et
- un arbre de verrouillage (13) comportant une portion (19) qui se trouve entre les deux ailes de retenue (25) et au niveau de laquelle cet arbre de verrouillage (13) a une section transversale allongée.

Ledit arbre de verrouillage (13) pivote, par rapport à l'élément de retenue (12), entre une première position et une deuxième position, dans laquelle sa portion de section transversale (19) allongée forme entretoise entre les deux ailes de retenue (25), afin d'empêcher un rapprochement de ces deux ailes de retenue (25) l'une vers l'autre.

## Description

La présente invention concerne un dispositif d'assemblage d'au moins deux pièces en tôle, ainsi qu'un ensemble comportant des pièces en tôle attachées par au moins un tel dispositif d'assemblage.

Il est connu d'assembler une première et une deuxième pièce en tôle à l'aide d'au moins un boulon qui comprend classiquement une vis et un écrou. Par exemple, ces pièces peuvent respectivement être une goulotte en tôle d'un chemin de câbles et une console de support de ce chemin de câble. L'installation du boulon est longue à réaliser, puisqu'elle requiert la mise en place de la vis, puis le vissage et enfin le serrage du boulon. De plus, alors qu'elle doit généralement être répétée un grand nombre de fois pour d'autres boulons, cette installation est fréquemment difficile à effectuer, en particulier lorsqu'elle impose de travailler en hauteur, dans une position inconfortable.

Dans GB-A-1 139 976 est décrite la fixation d'un élément percé sur un support, à l'aide d'un dispositif de fixation constitué d'un corps et d'une tige de serrage. Dans une première étape de cette fixation, on monte le corps sur le support. Ensuite, on place l'élément à fixer contre le support. Enfin, on installe la tige de serrage. Une fixation au moyen du dispositif décrit dans GB-A-1 139 976 comprend donc un nombre d'étapes qui la rend longue à réaliser.

L'invention a donc pour but de faciliter l'assemblage de deux pièces.

A cet effet, l'invention a pour objet un dispositif d'assemblage de première et deuxième pièces en tôle, notamment une goulotte en tôle d'un chemin de câbles et un support de ce chemin de câbles, dont chacune est percée d'un trou, ce dispositif d'assemblage étant caractérisé en ce qu'il comporte :
- d'une part, un élément de retenue des première et deuxième pièces, qui est destiné à passer dans les deux trous et comprend une tête de retenue de la première pièce, ainsi que deux ailes, en regard, de retenue de la deuxième pièce, et
- d'autre part, un arbre de verrouillage comportant une portion qui se trouve entre les deux ailes de retenue et au niveau de laquelle cet arbre de verrouillage a une section transversale allongée selon une direction radiale par rapport à un axe de pivotement dudit arbre par rapport à l'élément de retenue,
ledit arbre de verrouillage pivotant autour dudit axe entre une première position, dans laquelle ladite direction passe entre les deux ailes de retenue, et une deuxième position, dans laquelle ladite direction traverse les deux ailes de retenue et dans laquelle ladite portion de l'arbre de verrouillage forme entretoise entre les deux ailes de retenue, afin d'empêcher un rapprochement de ces deux ailes de retenue l'une vers l'autre.

D'autres caractéristiques avantageuse de ce dispositif d'assemblage sont définies par les revendications 2 à 9 annexées.

L'invention a également pour objet un ensemble comprenant au moins des première et deuxième pièces en tôle dont chacune est percée d'un trou, caractérisé en ce qu'il comprend un dispositif d'assemblage tel que défini ci-dessus, ledit élément de retenue passant dans le trou percé dans la première pièce et dans le trou percé dans la deuxième pièce, la tête de l'élément de retenue retenant la première pièce, les deux ailes de l'élément de retenue retenant la deuxième pièce.

D'autres caractéristiques avantageuses de cet ensemble sont définies par les revendications 11 et 12 annexées.

L'invention sera bien comprise à la lecture de la description, donnée uniquement à titre d'exemple et faite en se référant aux dessins annexés, sur lesquels :
- la figure 1 est une vue en perspective d'un tronçon d'un chemin de câbles conforme à l'invention, dont une goulotte en tôle et une console de support sont maintenues assemblées par deux exemplaires d'un dispositif d'assemblage également conforme à l'invention ;
- la figure 2 est une vue éclatée, en perspective, du tronçon de chemin de câbles représenté à la figure 1 ;
- la figure 3 est une vue en perspective du dispositif d'assemblage dont deux exemplaires sont représentés aux figures 1 et 2 ;
- la figure 4 est une vue en perspective d'un premier élément constitutif du dispositif d'assemblage représenté à la figure 3 ;
- la figure 5 est une vue en perspective d'un deuxième élément constitutif du dispositif d'assemblage représenté à la figure 3 ;
- la figure 6 est une vue partielle, en coupe selon le plan VI de la figure 1 ; et
- la figure 7 est une vue analogue à la figure 6 et illustre une étape de l'installation du dispositif d'assemblage de la figure 3.

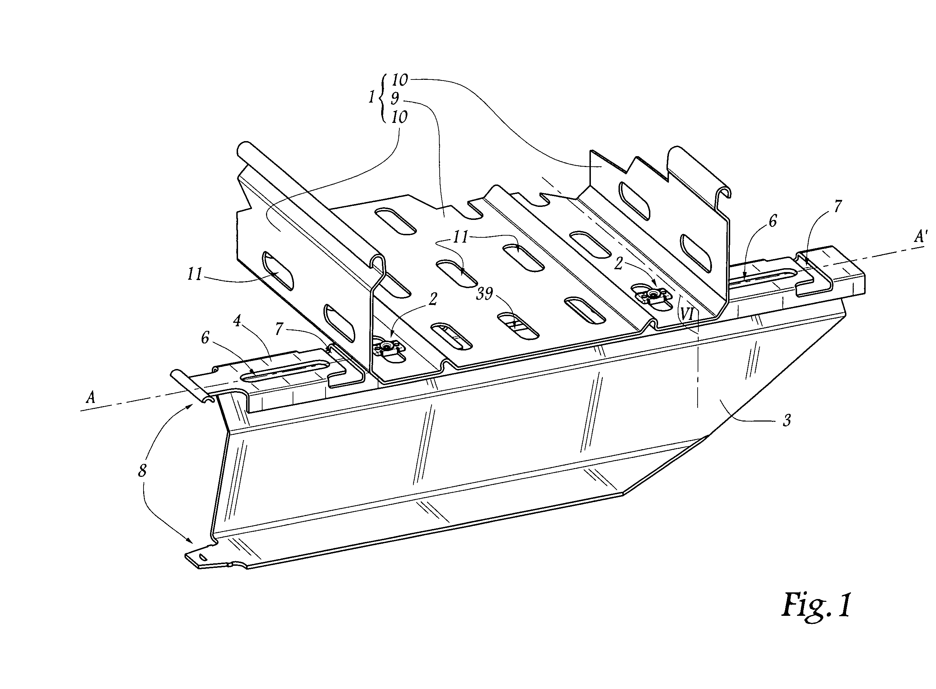

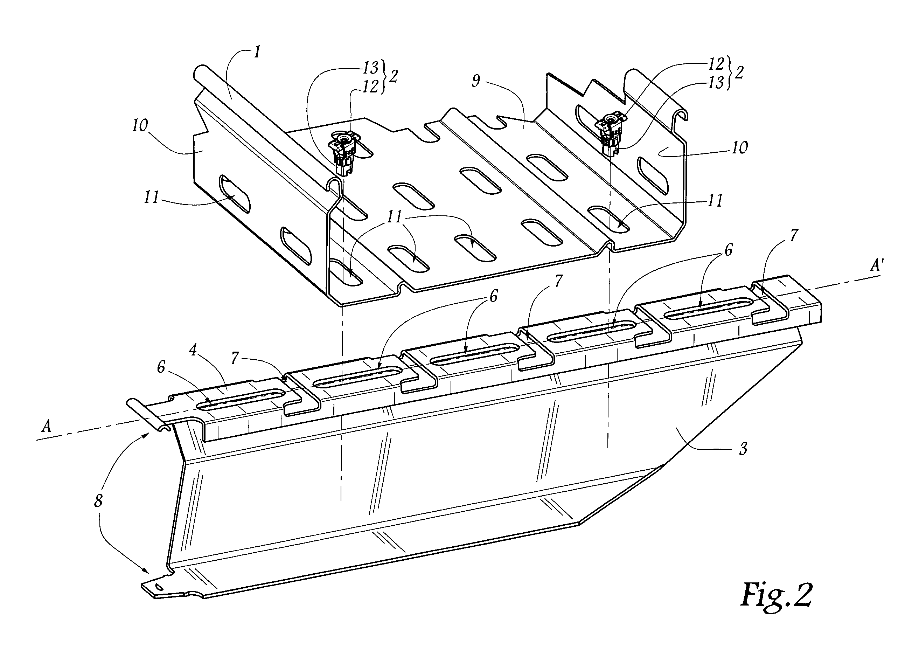

Un chemin de câbles conforme à l'invention est formé par une succession de goulottes 1, dont une seulement est représentée partiellement aux figures 1 et 2. Sur la figure 1, deux exemplaires identiques d'un dispositif d'assemblage 2 conforme à l'invention maintiennent assemblées la goulotte 1 et une console 3 de support d'un tronçon du chemin de câbles.

La console 2, qui est connue en soi, est une pièce d'un seul tenant, obtenue par pliage d'un flan de tôle préalablement découpé. Elle comporte une partie de support 4, qui est allongée selon un axe médian A-A' transversal à la goulotte 1 et sur laquelle repose cette goulotte 1. Cette partie de support 4 est percée de trous 6 et 7, disposés alternativement. Les trous 6 sont oblongs et sont placés dans le prolongement les uns des autres, de manière à s'étendre selon l'axe médian A-A'. Les trous 7 permettent le montage, selon un agencement connu, d'une goulotte en treillis soudé, non représentée.

La console 2 se termine latéralement par des moyens haut et bas de fixation 8, qui permettent son montage sur une crémaillère, comme cela est décrit dans le brevet français n° 2 736 138.

La goulotte 1 comporte un fond plat 9, à partir duquel s'étendent à angle droit deux parois latérales 10. Elle est obtenue de manière connue par formage d'une tôle allongée, qui est percée de plusieurs rangées longitudinales de trous oblongs de ventilation 11, dirigés selon la longueur de la goulotte 1.

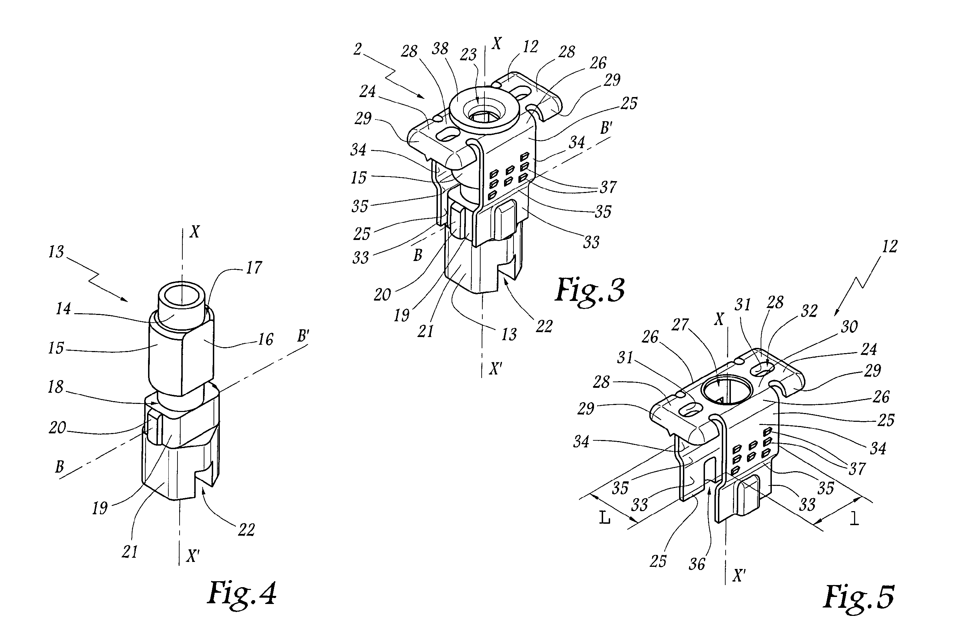

Sur la figure 3, il est représenté un seul dispositif d'assemblage 2, qui se compose de deux éléments indissociables, à savoir un élément de retenue 12 et un arbre de verrouillage 13 monté à pivotement.

L'arbre de verrouillage 13 est symétrique par rapport à son axe de pivotement X-X'. Avant d'être monté dans l'élément de retenue 12, cet arbre de verrouillage 13 est tel qu'illustré à la figure 4. A l'une de ses deux extrémités, il se termine alors par une portion tubulaire 14, que prolonge une portion 15. Sauf au niveau de deux méplats 16, cette portion 15 est plus large que la portion tubulaire 14, si bien qu'elle définit un épaulement extérieur 17.

Une gorge 18 est ménagée entre la portion 15 et une came 19 que définit l'arbre de verrouillage 13. Au niveau de cette came 19, l'arbre de verrouillage 13 a une section transversale allongée selon une direction B-B' perpendiculaire à l'axe de pivotement X-X'. La came 19 porte deux bosses latérales d'accouplement 20, dont chacune est, d'une part, allongée selon une direction parallèle à l'axe de pivotement X-X' et, d'autre part, disposée au niveau de l'une des deux extrémités de la section allongée précitée.

A l'opposé de la portion tubulaire 14, l'arbre de verrouillage 13 se termine par une tête creuse d'accouplement 21, qui prolonge la came 19. Au niveau de cette tête 21, les sections transversales interne et externe de l'arbre de verrouillage 13 sont globalement hexagonales, si bien que cet arbre de verrouillage peut être manoeuvré aussi bien à l'aide d'une clé six pans mâle non représentée, en prise dans la tête 21, qu'à l'aide d'une clé à pipe non représentée ou d'une clé plate non représentée, en prise sur cette tête 21. En outre, la tête 21 délimite une fente 22, grâce à laquelle on peut faire pivoter l'arbre de verrouillage 13 à l'aide d'un tournevis non représenté.

Pour permettre l'accouplement d'une clé six pans mâle non représentée, un trou axial 23, qui présente une section transversale sensiblement hexagonale, est prévu dans la portion 15 et débouche à l'intérieur de la portion tubulaire 14.

L'élément de retenue 12, représenté seul à la figure 5, est constitué d'un flan métallique mis en forme. Il est sensiblement symétrique par rapport à l'axe de pivotement X-X' de l'arbre de verrouillage 13 et il comporte une tête allongée de retenue 24, ainsi que deux ailes de retenue 25, en regard l'une de l'autre et globalement parallèles l'une par rapport à l'autre. Un pli 26 sensiblement à angle droit relie chacun des deux grands côtés de la tête 24 à l'une des ailes 25.

La tête 24 est percé d'un trou central 27, qui est circulaire et prévu pour le passage de la portion tubulaire 14 de l'arbre de verrouillage 13. Cette tête 24 se termine par deux portions d'extrémité opposées 28, dont chacune est muni d'un rebord d'appui 29, prolonge une portion intermédiaire 30 de la tête 24 et se trouve au-delà des deux ailes 25, d'un côté de ces dernières. La tête 24 est muni de deux rebords de rigidification 31, dont chacun entoure un trou 32 percé dans cette tête 24, à cheval sur une portion d'extrémité 28 et la portion intermédiaire 30.

Chaque aile 25 comporte une portion 33 et une portion 34, qui s'étend entre la portion 33 et la tête 24, à partir d'un pli 26. Ces portions 33 et 34 sont sensiblement parallèles à l'axe de pivotement X-X' et sont décalées axialement l'une de l'autre. Elle sont reliées l'une à l'autre par une portion oblique 35, si bien qu'elles sont également décalées latéralement l'une de l'autre. Les portions obliques 35 sont orientées de telle manière que les portions 33 d'un même élément 12 soient plus proches l'une de l'autre que ne le sont les portions 34 de cet élément 12. En d'autres termes, l'espace que les ailes 25 d'un même élément 12 délimitent entre elles est plus étroit au niveau des portions 33 qu'au niveau des portions 34. L'élément de retenue 12 présente une première largeur l mesurée selon une direction parallèle à ses ailes 25 et une deuxième largeur L mesurée selon une direction perpendiculaire à ses ailes 25. Au niveau des portions 34 qui sont sensiblement parallèles entre elles, cette première largeur l et cette deuxième largeur L sont sensiblement égales.

Chaque portion 33, qui s'étend à partir de l'extrémité libre d'une aile 25, délimite une gorge intérieure 36 qui s'étend selon une direction sensiblement parallèle à l'axe de pivotement X-X'.

Chaque portion 34 porte plusieurs rangées de crans extérieurs d'encliquetage 37, qui ne sont pas tous disposés à la même distance de la tête 24, pour permettre une adaptation à une modification de l'épaisseur de la tôle de la goulotte 1 et/ou de l'épaisseur de la tôle de la console 3. A mesure que l'on se rapproche de la tête 24, chaque cran d'encliquetage 37 s'éloigne de la portion 34 qui le porte.

Pour assembler l'élément de retenue 12 et l'arbre de verrouillage 13, on commence par enfiler la tête 24 sur la portion tubulaire 14, jusqu'à ce que cette tête 24 bute contre l'épaulement 17. Ensuite, on déforme plastiquement la portion tubulaire 14 en une collerette de retenue 38, visible à la figure 3. Cette collerette 38 et l'épaulement 17 délimitent conjointement une gorge dans laquelle pénètre la tête 24, de sorte que cette dernière retient axialement l'arbre de verrouillage 16, qui peut toutefois pivoter par rapport à l'élément de retenue 12, autour de l'axe X-X'. Le fait que l'élément de retenue 12 et l'arbre de verrouillage 13 soient indissociables, constitue un avantage, dans la mesure où il facilite la pose des dispositifs d'assemblage 2 et où il se traduit par une simplification de la gestion des stocks.

Sur la figure 3, la position de l'arbre de verrouillage 13 par rapport à l'élément de retenue 12 est telle que la direction B-B' passe entre les deux ailes 25, lesquelles peuvent de ce fait être rapprochées l'une de l'autre par déformation élastique de l'élément de retenue 12.

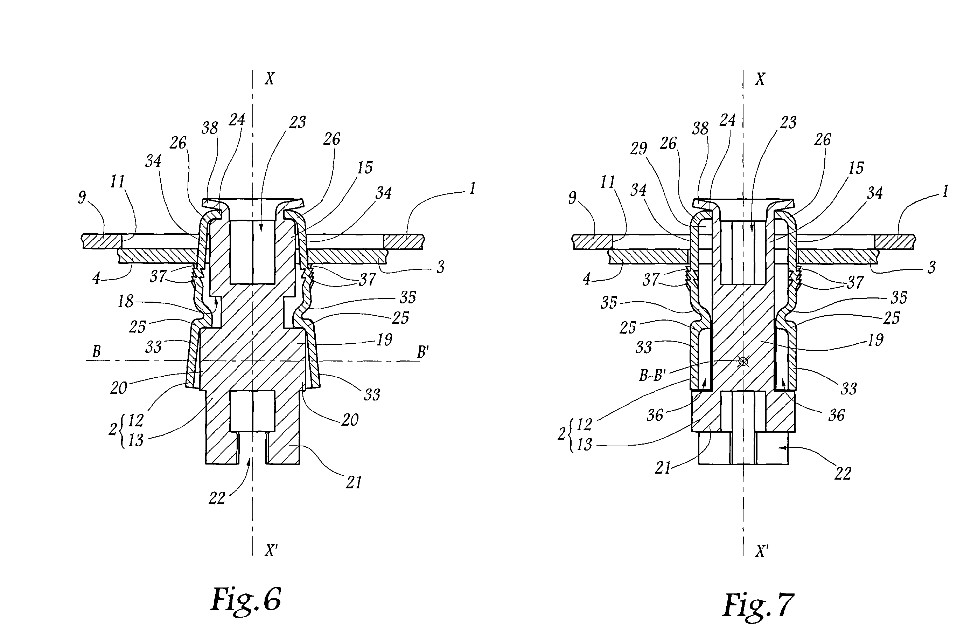

L'installation des dispositifs d'assemblage 2 peut avoir lieu après que la goulotte 1 a été posée sur la console 3. Tout d'abord, chaque dispositif d'assemblage 2, dont l'élément de retenue 12 et dont l'arbre de verrouillage 13 sont positionnés l'un par rapport à l'autre comme à la figure 3, est inséré dans un passage rectangle et plus précisément carré 39 formé par l'intersection d'un trou 6 et d'un trou de ventilation 11. Lors de l'insertion d'un dispositif d'assemblage 2 dans un passage carré 39, un ou plusieurs crans d'encliquetage 37 de ce dispositif d'assemblage 2 franchissent la partie 4 de la console 3. Lorsque les rebords 29 d'un dispositif d'assemblage 2 ont buté contre le fond 9 de la goulotte 1, ce dispositif d'assemblage 2 est tel qu'à la figure 7. A l'aide d'un outil qui peut être manoeuvré manuellement aussi bien en étant au-dessus de la goulotte 1 et en prise dans le trou axial 23 qu'en étant au-dessous de cette goulotte 1 et en prise sur ou dans la tête d'accouplement 21, ce qui est avantageux, on fait alors pivoter chaque arbre de verrouillage 13, d'un quart de tour. Cela ne requiert pas l'emploi d'un autre outil pour immobiliser chaque élément de retenue 12, puisque ce dernier est bloqué en rotation dans un passage carré 39, du fait que la face externe de chacune de ses ailes 25 s'applique sur un bord d'un trou 6 et que les bords latéraux de chacune de ses ailes 25 sont susceptibles de buter contre le bord d'un trou de ventilation 11. Une fois que chacune des deux bosses 20 de chaque arbre de verrouillage 13 est logée dans une gorge 36, chaque dispositif d'assemblage 2 est installé, ce qu'illustre la figure 6.

Il ressort de ce qui précède que, conformément au but de l'invention, l'assemblage de la goulotte 1 et de la console 3 à l'aide des dispositifs d'assemblage 2 est une opération particulièrement simple à effectuer. En particulier, l'arbre de verrouillage 13 et l'élément de retenue 12 d'un même dispositif d'assemblage 12 sont déjà assemblés et sont donc manipulés ensemble lors de la mise en place de ce dispositif d'assemblage 2, si bien que cette mise en place ne requiert qu'un seul geste. De plus, le montage complet d'un dispositif d'assemblage 2 ne nécessite qu'un seul autre geste, particulièrement simple à effectuer, qui consiste à faire pivoter d'un quart de tour l'arbre de verrouillage 13 de ce dispositif d'assemblage 2.

Les dispositifs d'assemblage 2 présentent l'avantage de pouvoir être démontés, ce pour quoi on applique la procédure inverse de celle qui vient d'être détaillée.

Sur la figure 6, un dispositif d'assemblage 2 est installé. Ses bosses 20 et les parois délimitant ses gorges 36 coopèrent à la manière de moyens d'accouplement complémentaires bloquant angulairement son arbre de verrouillage 13 dans une position telle que la direction B-B' associée à cet arbre 13 traverse chacune des ailes 25 de son élément de retenue 12. La came 19 de l'arbre de verrouillage 13 forme entretoise entre les deux ailes 25 de son élément de retenue 12 et maintient entre ces dernières une distance supérieure à celle qui sépare ces deux ailes 25, lorsque l'arbre de verrouillage 13 est tel qu'à la figure 7. Non seulement cette came 19 empêche alors le rapprochement des deux ailes 25 l'une vers l'autre, mais en outre elle serre chacune de ces ailes 25 sur un bord d'un trou 6. Deux crans d'encliquetage 37 de chaque aile 25 peuvent venir buter contre la console 3, afin de s'opposer au retrait du dispositif d'assemblage 2 si l'arbre de verrouillage 13 n'a pas été au préalable positionné comme à la figure 7.

L'invention ne se limite pas au mode de réalisation décrit précédemment. En particulier, les gorges 36 peuvent être remplacées par des fentes percées dans les ailes 25.

## Revendications

1. Dispositif d'assemblage de première et deuxième pièces en tôle (1, 3), notamment une goulotte en tôle d'un chemin de câbles et un support de ce chemin de câbles, dont chacune est percée d'un trou (6, 11), ce dispositif d'assemblage étant **caractérisé en ce qu'**il comporte :
- d'une part, un élément (12) de retenue des première et deuxième pièces (1, 3), qui est destiné à passer dans les deux trous (6, 11) et comprend une tête (24) de retenue de la première pièce (1), ainsi que deux ailes (25), en regard, de retenue de la deuxième pièce (3), et
- d'autre part, un arbre de verrouillage (13) comportant une portion (19) qui se trouve entre les deux ailes de retenue (25) et au niveau de laquelle cet arbre de verrouillage (13) a une section transversale allongée selon une direction (B-B') radiale par rapport à un axe (X-X') de pivotement dudit arbre par rapport à l'élément de retenue (12),
ledit arbre de verrouillage (13) pivotant autour dudit axe entre une première position, dans laquelle ladite direction (B-B') passe entre les deux ailes de retenue (25), et une deuxième position, dans laquelle ladite direction (B-B') traverse les deux ailes de retenue (25) et dans laquelle ladite portion (19) de l'arbre de verrouillage (13) forme entretoise entre les deux ailes de retenue (25), afin d'empêcher un rapprochement de ces deux ailes de retenue (25) l'une vers l'autre.

2. Dispositif selon la revendication 1, **caractérisé en ce que** chacune des deux ailes de retenue (25) est munie d'au moins un cran d'encliquetage (37) orienté pour pouvoir passer dans lesdits trous (6, 11), dans un premier sens, et pour buter contre la deuxième pièce (3), dans un deuxième sens inverse au premier sens.

3. Dispositif selon l'une quelconque des revendications précédentes, **caractérisé en ce que** les deux ailes de retenue (25) peuvent être éloignées l'une de l'autre par déformation élastique, au moins l'une des ailes de retenue (25) et l'arbre de verrouillage (13) définissant des moyens complémentaires d'accouplement (20, 36) disposés de telle manière que lorsque l'arbre de verrouillage (13) est dans la deuxième position, l'un de ces moyens complémentaires d'accouplement (20) pénètre dans l'autre moyen d'accouplement (36), afin de bloquer l'arbre de verrouillage (13) dans cette deuxième position.

4. Dispositif selon la revendication 3, **caractérisé en ce que** lesdits moyens complémentaires d'accouplement comprennent au moins une bosse (20) et au moins un logement (36) pour cette bosse (20) qui fait partie de l'arbre de verrouillage (13) et se trouve à une extrémité de ladite section transversale allongée, au moins l'une des ailes de retenue (25) comportant une première portion (34) et une deuxième portion (33) qui est plus éloignée de la tête de retenue (24) que la première portion (34) et délimite ledit logement (36).

5. Dispositif selon les revendications 2 et 4, **caractérisé en ce que** ladite première portion (34) porte l'un des deux crans d'encliquetage (37).

6. Dispositif selon l'une quelconque des revendications précédentes, **caractérisé en ce que** l'élément de retenue (12) porte l'arbre de verrouillage (13) monté à pivotement.

7. Dispositif selon la revendication 6, **caractérisé en ce que** l'arbre de verrouillage (13) passe dans un trou (27) percé dans la tête de retenue (24) qui retient cet arbre de verrouillage (13) et relie les ailes de retenue (25) l'une à l'autre.

8. Dispositif selon l'une quelconque des revendications précédentes, **caractérisé en ce que** l'arbre de verrouillage (13) se termine par deux portions d'extrémité opposées (15, 38, 21), dont chacune définit des moyens (21 ; 22 ; 23) d'accouplement d'un outil de manoeuvre de cet arbre de verrouillage (13) depuis la première position jusqu'à la deuxième position.

9. Dispositif selon l'une quelconque des revendications précédentes, **caractérisé en ce que** la tête (24) de l'élément de retenue se termine par deux portions d'extrémité opposées (28), dont chacune se trouve au-delà des deux ailes de retenue (25).

10. Ensemble comprenant au moins des première et deuxième pièces en tôle (1, 3) dont chacune est percée d'un trou (6, 11), **caractérisé en ce qu'**il comprend un dispositif d'assemblage (2) selon l'une quelconque des revendications précédentes, ledit élément de retenue (12) passant dans le trou (11) percé dans la première pièce (1) et dans le trou (6) percé dans la deuxième pièce (3), la tête (24) de l'élément de retenue (12) retenant la première pièce (1), les deux ailes (25) de l'élément de retenue (12) retenant la deuxième pièce.

11. Ensemble selon la revendication 10, **caractérisé en ce que** cet ensemble est un chemin de câbles ou analogues, formé d'une succession de goulottes en tôle, la première pièce étant l'une des goulottes (1), la deuxième pièce étant un support (3) du chemin de câbles ou analogues.

12. Ensemble selon la revendication 10 ou 11, **caractérisé en ce que** lesdites ailes de retenue (25) sont globalement parallèles entre elles, l'intersection du trou percé (11) dans la première pièce (1) et du trou percé (6) dans la deuxième pièce (3) formant un rectangle (39), notamment un carré, délimité par des bords qui immobilisent angulairement l'élément de retenue (12) en coopérant avec lesdites ailes de retenue (25).
